# EUROPEAN PATENT APPLICATION

(11) **EP 2 256 599 A1**
(43) Date of publication of application: **01.12.2010**
(21) Application number: 09710058.0
(22) Date of filing: 12.02.2009
(51) Int. Cl.: G06F 3/041

(54) **A SELECTION DETERMINATION APPARATUS, A SELECTION DETERMINATION METHOD, A DATA RECORDING MEDIUM, AND A PROGRAM**

(30) Priority: 14.02.2008 JP 2008033556
(71) Applicant: Konami Digital Entertainment Co., Ltd., Tokyo 107-8324 (JP)
(72) Inventor: MORI, Shoji, Tokyo 107-8324 (JP)
(74) Representative: Rüger, Barthelt & Abel Patentanwälte
(86) International application number: PCT/JP2009/052315
(87) International publication number: WO 2009/101980

(57) **Abstract**

A selection determining device (200) includes a detecting unit (201) which detects, when a point on a touch screen is pressed, a coordinate value of the point, detects, when two points in a two-dimensional plane are pressed, a coordinate value of a midpoint between the two points, and detects that none is pressed when no points is pressed, a determining unit (202) which determines, when it is determined that none is pressed, whether or not any of pressible predetermined regions is singularly selected, any two of the pressible predetermined regions are simultaneously selected, or none is selected based on a sequence of states detected by the detecting unit (201) by then, and a display unit (203) displaying a graphic symbol representing each of the pressible predetermined regions on the touch screen.

## Description

### Technical Field

The present invention relates to a selection determining device and a selection determining method appropriate for distinguishing whether a button or the like displayed on a touch screen or the like is singularly selected or two buttons are simultaneously selected, an information recording medium recording a program for realizing these on a computer, and the program.

### Background Art

Conventionally, various input schemes that use a resistive touch screen have been proposed, and such technologies are disclosed in following Patent Literatures.

According to a technology disclosed in [Patent Literature 1] (paragraph 0034), as a player presses a second character image while pressing a first character image, coordinates of a midpoint between the first and second pressed positions is output from a touch panel. The second pressed position is calculated by causing the midpoint between the second pressed position and the first pressed position to be consistent with the output position. Determination for whether or not the second character image is pressed is performed based on the coordinates of the calculated pressed position likewise the case of the first character image.

Moreover, [Patent Literature 2] discloses a technology of determining that when a first coordinate value is detected and a second coordinate value is detected before such first coordinate is unlocked, two points (one is a point corresponding to the detected first coordinate value and another is a point corresponding to a coordinate value uniquely calculated when the second coordinate value is taken as a midpoint) on a touch screen having the midpoint which is the second coordinate value are simultaneously pressed.

In other words, both technologies disclosed in [Patent Literature 1] and [Patent Literature 2] determine whether or not two positions are simultaneously pressed provided that there is certainly a time difference between the first pressing and the second pressing.

Patent Literature 1: Unexamined Japanese Patent Application KOKAI Publication No. 2006-244005.
Patent Literature 2: Unexamined Japanese Patent Application KOKAI Publication No. 2001-134382.

### Disclosure of Invention

### Problem to be solved by the Invention

In games or the like, however, there is a case in which it is desired to detect in a timing critical manner that two positions on a touch screen are simultaneously pressed. Further, according to [Patent Literature 1] and [Patent Literature 2], when a position is singularly pressed or a plurality of positions are simultaneously pressed, if another position is involuntarily pressed, it is recognized as an input when such pressing is made. Desirably, such wrong operations should be suppressed as far as possible.

The present invention has been made in order to overcome the above-described problem, and it is an object of the present invention to provide a selection determining device and a selection determining method appropriate for distinguishing whether a button or the like displayed on a touch screen or the like is singularly selected or two buttons are simultaneously selected, an information recording medium recording a program for realizing these on a computer, and the program.

### Means for Solving the Problem

To achieve the above-described object, a selection determining device according to a first aspect of the present invention includes a detecting unit and a determining unit, and determines that either one of two predetermined regions arranged on a two-dimensional plane so as not to overlap with each other is selected or both of the two predetermined regions are selected.

The two-dimensional plane is a display surface of a touch screen of a game machine or the like, and the predetermined regions that can be pressed by an input pen or a finger by a player are arranged on the display surface so as not to overlap one another. The player singularly presses the predetermined regions or simultaneously presses both of the predetermined regions to input an instruction into the game machine or the like.

A midpoint region arranged on the two-dimensional plane is a region swept by a midpoint of points included in respective two predetermined regions. The predetermined region is typically a circle with a predetermined radius r. Accordingly, the midpoint region between the two predetermined regions is also a circle with the predetermined radius r.

The midpoint region does not overlap with any of the predetermined regions. That is, if the midpoint region overlaps with any of the predetermined regions, when the detecting unit to be discussed later detects pressing of a point, there is a case in which it is difficult to uniquely determine whether the detected point is a point in the midpoint region or a point in the predetermined region. In order to avoid this case, the midpoint region and the predetermined regions are arranged so as not to overlap one another.

The detecting unit detects, when a point on the two-dimensional plane is pressed, a coordinate value of the point, detects, when two points on the two-dimensional plane are pressed, a coordinate value of a midpoint between the two points, and detects that no point is pressed when none is pressed. That is, the detecting unit detects an input to the touch screen widely used in the game machine or the like.

The determining unit determines, when it is detected that none is pressed, and a point included in the predetermined region is continuously detected for equal to a first threshold time or longer, and then it is detected that none is pressed, that the predetermined region is selected. That is, it is necessary that the point included in the predetermined region is continuously detected for equal to the first threshold time or longer so that the determining unit determines that the predetermined region is selected, but such determination is settled when pressing is released.

The determining unit determines, when it is detected that none is pressed, and a point included in the midpoint region is continuously detected for equal to the first threshold time or longer, and then it is detected that none is pressed, that both of the two predetermined regions are selected. That is, when the midpoint region is detected, it means that the two predetermined regions are simultaneously pressed. Like the case in which it is determined that the predetermined regions is selected, it is necessary that the point included in the midpoint region is continuously detected for equal to the first threshold time or longer so that the determining unit determines that the two predetermined regions are selected, but such determination is also settled when pressing is released.

When a point included in the predetermined region is continuously detected for equal to a second threshold time or shorter between when a point included in the midpoint region is continuously detected for equal to the first threshold time or longer and when it is detected that none is pressed, and, when a point included in the predetermined region is continuously detected for equal to a third threshold time or shorter between when it is detected that none is pressed and when a point included in the midpoint region is continuously detected for equal to the first threshold time or longer, the determining unit determines that both of the two predetermined regions are selected.

That is, since a human operation includes an error, there is a time difference in most cases even if a player intends to simultaneously press two points or to release pressing. Accordingly, in consideration of such a human error, when two points in the predetermined regions are substantially simultaneously pressed, the determining unit processes as the two points in the predetermined regions being simultaneously pressed, and when pressing of the two points in the predetermined regions are substantially simultaneously released, the determining unit processes as pressing of the two points in the predetermined regions being simultaneously released.

The detecting unit outputs through a resistive touch screen, when a point on the two-dimensional plane is pressed, a coordinate value of the point, outputs, when two points on the two-dimensional plane are pressed, a coordinate value of a midpoint between the two points, and detects that none is pressed when no point is pressed. That is, each coordinate value on the two-dimensional plane used by the selection determining device corresponds to each coordinate value of the touch screen as described above.

A display unit displays a graphic symbol on a position associated with each predetermined region on the touch screen, and the graphic symbol representing each of the predetermined regions. That is, the graphic symbol representing the predetermined region is displayed on a corresponding position on the touch screen so that a player can find out which positions on the touch screen should be pressed.

When the detecting unit detects that none is pressed and then detects a point included in the predetermined region for equal to the first threshold time or longer, the display unit highlightingly displays the graphic symbol representing the predetermined region, and then when the detecting unit detects that none is pressed or detects a point not included in the predetermined region, the display unit terminates highlighting display.

When the detecting unit detects that none is pressed and then a point included in the midpoint region for equal to the first threshold time or longer, the display unit highlightingly displays the graphic symbols representing the two predetermined regions, and then when the detecting unit detects that none is pressed or detects a point not included in any of the predetermined region and the midpoint region, the display unit terminates highlighting display.

In any of the above-explained conditions, the determining unit settles the determination for whether or not a point in the predetermined region is singularly pressed or two points in the predetermined regions are simultaneously pressed when detecting releasing of press (a state in which none is pressed). The display unit, however, highlightingly displays the graphic symbol representing the corresponding predetermined region with a different color etc., at a time point when the condition for recognition of selection is satisfied without waiting for settlement of determination. Accordingly, information to the effect that which predetermined region is selected can be subjected to feedback to a player so that the player can confirm whether or not he/she is pressing the touch screen correctly. At a time point when a condition in which it is recognized that the predetermined region is selected becomes not satisfied or when a time point that releasing of pressing that settles the determining condition is detected, the display unit terminates highlighting display.

When the detecting unit continuously detects a point included in the predetermined region for equal to the third threshold time or shorter between when it is detected that none is pressed and when a point included in the midpoint region is detected for equal to the first threshold time or longer, the display unit highlightingly displays the graphic symbols representing the two predetermined regions, and when the detecting unit continuously detects a point included in the predetermined region for equal to the second threshold time or longer between when a point included in the midpoint region is detected for equal to the first threshold time or longer and when it is detected that none is pressed, the display unit terminates highlighting display.

That is, in consideration of an error included in a human operation, when two points in the predetermined regions are substantially simultaneously pressed, the display unit processes as the two points in the predetermined regions being simultaneously pressed, and when pressing of the two points in the predetermined regions are substantially simultaneously released, the display unit processes as the pressing of the two points in the predetermined regions being simultaneously released.

Accordingly, in a case in which a predetermined region is once highlightingly displayed as being selected, the pressed predetermined region at first is not determined as being selected when a player presses another position which results in termination of highlightingly display before pressing is released. Consequently, when mistakenly doing an unintentional operation, a player can cancel the operation, and the player can recognize whether or not the current selection operation is valid or invalid based on presence/absence of highlighting display.

The second threshold time and the third threshold time are shorter than the first threshold time. That is, since the second threshold time and the third threshold time are each an allowed time difference when two points are pressed (or releasing of the two points), and are set to be shorter than the first threshold time.

At this time, it is possible to adjust a length of time that the predetermined region must be continuously pressed for recognition of pressing by changing a length of the first threshold time, and it is possible to adjust a length of time that is allowed as a time difference between pressing of two points (or a time difference of releasing of two points) by changing respective lengths of the second threshold time and the third threshold time.

Accordingly, the selection determining device of the present invention can precisely determine that two points are simultaneously pressed, so that the selection determining device is preferable for a game application that requires determination of simultaneous pressing in a timing critical manner.

Moreover, to achieve the above-described object, a selection determining device according a second aspect of the present invention includes a detecting unit and a determining unit, and determines that any one of or two of plural predetermined regions A[i] (where i = 1, 2, ..., N) arranged on a two-dimensional plane so as not to overlap one another are selected. That is, the selection determining device according to the second aspect of the present invention determines, when equal to two or more predetermined region are present, whether or not any one of the predetermined regions or two of the predetermined regions are selected.

A midpoint region B[i, j] (where i = 1, 2,..., N, and j = 1, 2, ..., i-1) arranged on the two-dimensional plane is a region swept by a midpoint between a point included in a predetermined region A[i] and a point included in a predetermined region A[j].

Each of the midpoint region does not overlap with other midpoint regions and with any of the predetermined regions. That is, like the selection determining device according to the first aspect of the present invention, the midpoint regions are so arranged as not to overlap with any of the predetermined regions and with other midpoint regions.

For example, when each predetermined region A[i] (when i = 1, 2,..., N) is arranged on each vertex region of a regular n-sided polygon with N being an even number equal to two or larger, if arbitrary two points in predetermined regions on diagonal lines are selected, a midpoint region of those predetermined regions all becomes the same region. Accordingly, the predetermined regions are arranged so that the midpoint regions do not overlap one another in order to enable unique determination of which midpoint region between any two predetermined regions is when the midpoint region is given.

The detecting unit detects, when a point on the two-dimensional plane is pressed, a coordinate value of the point, detects, when two points on the two-dimensional plane are pressed, a coordinate value of a midpoint between the two points, and detects that none is pressed when no point is pressed.

The determining unit determines, based on a result detected by the detecting unit, whether or not any one of the predetermined regions is selected or two of the predetermined regions are simultaneously selected as follows.

That is, the determining unit determines, with respect to integer numbers p, q (where p = 1, 2, ... , N, q = 1, 2, ... N, and p ≠q),
(1) that a predetermined region A[p] is selected when the detecting unit detects that none is pressed, and continuously detects a coordinate value included in the predetermined region A[p] for equal to a first threshold time or longer, and then detects that none is pressed,
(2) that two predetermined regions A[p] and A[q] are simultaneously selected when the detecting unit detects that none is pressed, and continuously detects a coordinate value included in a midpoint region B[p, q] for equal to the first threshold time or longer, and then detects that none is pressed,
(3) that the two predetermined regions A[p] and A[q] are simultaneously selected when the detecting unit detects that none is pressed, and continuously detects a coordinate value included in the midpoint region B[p, q] for equal to the first threshold time or longer, and continuously detects a coordinate value included in the predetermined region A[p] or the predetermined region A[q] for equal to a second threshold time or shorter, and then detects that none is pressed,
(4) that the two predetermined regions A[p] and A[q] are simultaneously selected when the detecting unit detects that none is pressed, and continuously detects a coordinate value included in the predetermined region A[p] for equal to a third threshold time or shorter, and continuously detects a coordinate value included in the midpoint region B[p, q] for equal to the first threshold time or longer, and then detects that none is pressed,
(5) that the two predetermined regions A[p] and A[q] are simultaneously selected when the detecting unit detects that none is pressed, and continuously detects a coordinate value included in the predetermined region A[p] for equal to the third threshold time or shorter, and continuously detects a coordinate value included in the midpoint region B[p, q] for equal to the first threshold time or longer, and continuously detects a coordinate value included in the predetermined region A[p] or the predetermined region A[q] for equal to the second threshold time or shorter, and then detects that none is pressed, and
(6) that none of the predetermined regions is selected in a case other than (1) to (5).

That is, above-explained (1) to (6) show conditions for determination of, when a plurality of predetermined regions and a plurality of midpoint regions are present, whether or not any one of the predetermined regions is singularly pressed or two of the predetermined regions are simultaneously pressed.

It is necessary that a point included in the predetermined region is pressed for equal to the first threshold time or longer and then pressing thereof is released (i.e., the detecting unit detects that none is pressed) so that the determining unit determines that the predetermined region is singularly pressed. Conversely, it is necessary that a coordinate value included in each of the two predetermined regions is simultaneously or substantially simultaneously pressed (i.e., a time length between pressing of one point and pressing of another point is equal to the third threshold time or shorter), the pressing state continues for equal to the first threshold time or longer, and then the pressing of the two predetermined regions are released simultaneously or substantially simultaneously (i.e., a time length between releasing of one point and releasing of another point is equal to the second threshold time or shorter) so that the determining unit determines that the two predetermined regions are simultaneously pressed. When none of the above-explained conditions is satisfied, the detecting unit determines that none of the predetermined regions is selected.

The second threshold time and the third threshold time are shorter than the first threshold time.

The detecting unit outputs through a resistive touch screen, when a point on the two-dimensional plane is pressed, a coordinate value of the point, outputs, when two points on the two-dimensional plane are pressed, a coordinate value of a midpoint between the two points, and detects that none is pressed when no point is pressed.

The selection determining device further includes a display unit. The display unit displays a graphic symbol on a position associated with each predetermined region on the touch screen, and the graphic symbol representing each of the predetermined regions.

In the selection determining device, with respect to integer numbers p, q (where p = 1, 2, ..., N, q = 1, 2, ..., N, and p ≠q) the display unit
(7) highlightingly displays a graphic symbol representing a predetermined region A[p] when the detecting unit detects that none is pressed, and then continuously detects a coordinate value included in the predetermined region A[p] for equal to the first threshold time or longer, and terminates highlighting display when the detecting unit detects that none is pressed or detects a coordinate value not included in the predetermined region A[p],
(8) highlightingly displays graphic symbols representing respective predetermined regions A[p] and A[q] when the detecting unit detects that none is pressed, and then continuously detects a coordinate value included in a midpoint region B[p, q] for equal to the first threshold time or longer, and terminates highlighting display when the detecting unit detects that none is pressed, detects a coordinate value not included in the midpoint region B[p, q] and in the predetermined regions A[p] and A[q], or continuously detects a coordinate value included in the predetermined region A[p] or the predetermined region A[q] for equal to the second threshold time or longer, and
(9) highlightingly displays graphic symbols representing respective predetermined regions A[p] and A[q] when the detecting unit detects that none is pressed, and continuously detects a coordinate value included in the predetermined region A[p] for equal to the third threshold time or shorter, and then continuously detects a coordinate value included in the midpoint region B[p, q] for equal to the first threshold time or longer, and terminates highlighting display when the detecting unit detects that none is pressed, and, detects a coordinate value not included in the midpoint region B[p, q] and in the predetermined regions A[p] and A[q] or continuously detects a coordinate value included in the predetermined region A[p] or the predetermined region A[q] for equal to the second threshold time or longer.

In any of the above-explained conditions (1) to (5), the determining unit settles determination for whether or not a point in the predetermined region is singularly selected or two points in the predetermined regions (the predetermined region A[p] or the predetermined regions A[p] and A[q] (where p = 1, 2, ..., N, q = 1, 2, ..., N, and p ≠q)) are selected after detecting releasing of press. The display unit, however, highlightingly displays the graphic symbol representing the corresponding predetermined region with a different color etc., at a time point when the condition for recognition of selection of the predetermined region is satisfied without waiting for settlement of determination. The display unit terminates highlighting display at a time point when a condition in which it is recognized that the predetermined region is selected becomes not satisfied or at a time point that releasing of pressing that settles the determination condition is detected.

The selection determining device further includes an alerting unit that makes alerting until it is detected that none is pressed if highlighting display is terminated even though a coordinate value is detected after the display unit highlightingly displays any of the predetermined regions.

As described above, in a case in which a predetermined region is once highlightingly displayed as being selected, the pressed predetermined region at first is not determined as being selected when a player presses another position which results in termination of highlightingly display before pressing is released. Accordingly, when an operation that results in termination of highlightingly display is done by the player, the alerting unit makes an alert with a beep sound, or displays a notification in a dialogue box, etc., to notify the player of the termination of the first operation until the detecting unit detects that none is pressed.

When N = 2 or N = 3, a predetermined region A[i] (where i = 1, 2, ..., N) and a midpoint region B[i, j] (when i = 1, 2, ..., N, and j = 1, 2, ..., i-1) may be each a circle having a radius r, and a distance between respective centers of the predetermined regions is equal to 4r or larger.

That is, as described above, when a radius of each predetermined region is r, a radius of the midpoint region obtained when arbitrary two predetermined regions are selected is also r. When N = 2, the midpoint region may be arranged between the two predetermined regions so as to adjoin to the two predetermined regions or a distance equal to the distance or longer may be set between the two predetermined regions so that the two predetermined regions and the midpoint region between the predetermined regions do not overlap one another. Accordingly, a distance between respective centers of the predetermined regions may be equal to 4r or longer.

Likewise, when N = 3, the predetermined regions may be arranged at respective vertexes of a triangle and a distance between respective centers of the predetermined regions is set to be equal to 4r or larger so that three predetermined regions and three midpoint regions obtained when arbitrary two points in the predetermined regions are selected do not overlap one another, and each of the midpoint regions do not overlap with other midpoint regions.

Further, when N = 4, a predetermined region A[i] (where i = 1, 2, ..., N) and a midpoint region B[i, j] (when i = 1, 2, ..., N, and j = 1, 2, ..., i-1) are each a circle having a radius r, a center of the predetermined region is arranged at a vertex of a kite-like shape having a side with a length equal to 4r or longer, and a distance between respective centers of diagonal lines of the kite-like shape may be equal to 2r or larger.

That is, as described above, in a case in which the predetermined regions are arranged at respective vertexes of a square, the midpoint regions overlap with each another when two points on the diagonal lines are selected. Accordingly, the predetermined regions are arranged at respective vertexes of a kite-like shape having a side with a length equal to 4r or longer, not a square. If midpoints on the diagonal lines are so arranged as to be at least adjoin each other or to have an interval equal to 4r or longer, the predetermined regions and the midpoint region thereof do not overlap one another or each of the midpoint regions does not overlap with other midpoint regions.

Moreover, to achieve the above-described object, a selection determining method according another aspect of the present invention is a method of determining that either one of two predetermined regions arranged on a two-dimensional plane so as not to overlap with each other is selected or both of the two predetermined regions are selected.

The selection determining method is executed by a selection determining device including a detecting unit and a determining unit, and a midpoint region arranged on the two-dimensional plane is a region swept by a midpoint of points included in respective two predetermined regions and the midpoint region does not overlap with any of the predetermined regions.

The selection determining method includes a detecting step and a determining step. In the detecting step, the detecting unit detects, when a point on the two-dimensional plane is pressed, a coordinate value of the point, detects, when two points on the two-dimensional plane are pressed, a coordinate value of a midpoint between the two points, and detects that no point is pressed when none is pressed.

In the determining step, the determining unit determines, when it is detected that none is pressed, and a point included in the predetermined region is continuously detected for equal to a first threshold time or longer, and then it is detected that none is pressed, that the predetermined region is selected, and determines, when it is detected that none is pressed, and a point included in the midpoint region is continuously detected for equal to the first threshold time or longer, and then it is detected that none is pressed, that both of the two predetermined regions are selected.

Moreover, to achieve the above-described object, a selection determining method according to the other aspect of the present invention is a method of determining that any one of or two of plural predetermined regions A[i] (where i = 1, 2, ..., N) arranged on a two-dimensional plane so as not to overlap one another are selected.

The selection determining method is executed by a selection determining device including a detecting unit and a determining unit, and a midpoint region B[i, j] (when i = 1, 2, ... , N, and j = 1, 2, ..., i-1) arranged on the two-dimensional plane is a region swept by a midpoint between a point included in a predetermined region A[i] and a point included in a predetermined region A[j], and each of the midpoint region does not overlap with other midpoint regions and with any of the predetermined regions.

The selection determining method includes a detecting step and a determining step. In the detecting step, the detecting unit detects, when a point on the two-dimensional plane is pressed, a coordinate value of the point, detects, when two points on the two-dimensional plane are pressed, a coordinate value of a midpoint between the two points, and detects that none is pressed when no point is pressed.

In the determining step, the determining unit determines the following with respect to integer numbers p, q (where p = 1, 2, ..., N, q = 1, 2, ..., N, and p ≠q). That is, the determining unit determines
(1) that a predetermined region A[p] is selected when the detecting unit detects that none is pressed, and continuously detects a coordinate value included in the predetermined region A[p] for equal to a predetermined first threshold time or longer, and then detects that none is pressed,
(2) that two predetermined regions A[p] and A[q] are simultaneously selected when the detecting unit detects that none is pressed, and continuously detects a coordinate value included in a midpoint region B[p, q] for equal to the predetermined first threshold time or longer, and then detects that none is pressed,
(3) that the two predetermined regions A[p] and A[q] are simultaneously selected when the detecting unit detects that none is pressed, and continuously detects a coordinate value included in the midpoint region B[p, q] for equal to the predetermined first threshold time or longer, and continuously detects a coordinate value included in the predetermined region A[p] or the predetermined region A[q] for equal to a predetermined second threshold time or shorter, and then detects that none is pressed,
(4) that the two predetermined regions A[p] and A[q] are simultaneously selected when the detecting unit detects that none is pressed, and continuously detects a coordinate value included in the predetermined region A[p] for equal to a predetermined third threshold time or shorter, and continuously detects a coordinate value included in the midpoint region B[p, q] for equal to the predetermined first threshold time or longer, and then detects that none is pressed,
(5) that the two predetermined regions A[p] and A[q] are simultaneously selected when the detecting unit detects that none is pressed, and continuously detects a coordinate value included in the predetermined region A[p] for equal to the predetermined third threshold time or shorter, and continuously detects a coordinate value included in the midpoint region B[p, q] for equal to the predetermined first threshold time or longer, and continuously detects a coordinate value included in the predetermined region A[p] or the predetermined region A[q] for equal to the predetermined second threshold time or shorter, and then detects that none is pressed, and
(6) that none of the predetermined regions is selected in a case other than (1) to (5).

The second threshold time and the third threshold time are shorter than the first threshold time.

A program according to still other aspect of the present invention is configured to allow a computer to function as the above-explained selection determining device.

The program of the present invention can be recorded in a computer-readable information recording medium, such as a compact disk, a flexible disk, a hard disk, a magneto-optical disk, a digital video disk, a magnetic tape, or a semiconductor memory. The above-explained program can be independently distributed and sold over a computer network from a computer which executes the program. Moreover, the information recording medium can be distributed and sold independently from the computer.

### Effect of the Invention

It is possible to provide a selection determining device, a selection determining method, an information recording medium, and a program appropriate for distinguishing whether a button or the like displayed on a touch screen or the like is singularly selected or two buttons are simultaneously selected.

### Brief Description of Drawings

FIG. 1 is an exemplary diagram showing a general configuration of a typical game device realizing a selection determining device according to an embodiment of the present invention;
FIG. 2 is a diagram showing a general configuration of the selection determining device of the present embodiment;
FIG. 3A is a diagram showing an illustrative configuration of a predetermined-region information table;
FIG. 3B is a diagram showing an illustrative configuration of a midpoint-region information table;
FIG. 4A is a diagram showing an illustrative arrangement of midpoint regions arranged so as not to overlap with any of other predetermined regions and with the midpoint regions when N = 2;
FIG. 4B is a diagram showing an illustrative arrangement of the midpoint regions arranged so as not to overlap with any of other predetermined regions and with the midpoint regions when N = 3;
FIG. 4C is a diagram showing an illustrative arrangement of the midpoint regions arranged so as not to overlap with any of other predetermined regions and with the midpoint regions when N = 4;
FIG. 5 is a flowchart for explaining a selection determining process according to an embodiment;
FIG. 6 is a diagram for explaining a state change to be detected so that it is determined that one of the predetermined regions is singularly selected;
FIG. 7A is a diagram for explaining a state change to be detected so that it is determined that two predetermined regions are simultaneously selected;
FIG. 7B is a diagram for explaining a state change to be detected so that it is determined that two predetermined regions are simultaneously selected;
FIG. 7C is a diagram for explaining a state change to be detected so that it is determined that two predetermined regions are simultaneously selected;
FIG. 8A is a diagram for explaining a state change to be detected so that it is determined that two predetermined regions are simultaneously selected;
FIG. 8B is a diagram for explaining a state change to be detected so that it is determined that two predetermined regions are simultaneously selected;
FIG. 8C is a diagram for explaining a state change to be detected so that it is determined that two predetermined regions are simultaneously selected;
FIG. 9 is a flowchart for explaining a highlighting display process by the selection determining device according to another embodiment of the present invention; and
FIG. 10 is a diagram showing a general configuration of the selection determining device according to another embodiment of the present invention.

### Description of Reference Numerals

- 100: Game device
- 101: CPU
- 102: ROM
- 103: RAM
- 104: Interface
- 105: Controller
- 106: External memory
- 107: Image processing unit
- 108: DVD-ROM drive
- 109: NIC
- 110: Sound processing unit
- 111: Touch sensor panel
- 200: Selection determining device
- 201: Detecting unit
- 202: Determining unit
- 203: Display unit
- 204: Alerting unit

### Best Mode for Carrying Out the Invention

### <First Embodiment>

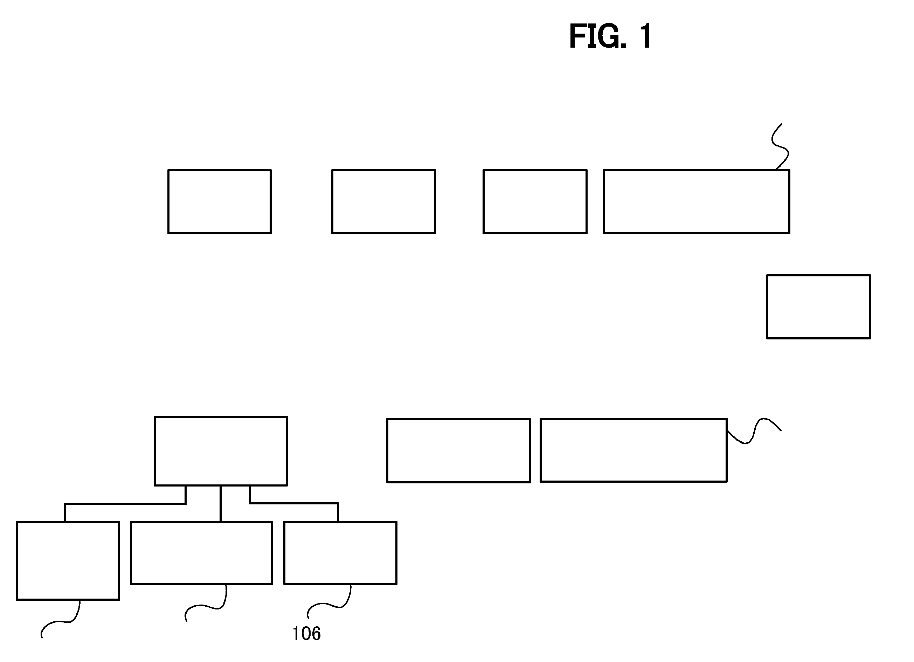

FIG. 1 is an exemplary diagram showing a general configuration of a portable game device typical of realizing a selection determining device of an embodiment of the present invention. An explanation will now be given with reference to this diagram.

A game device 100 includes a CPU (Central Processing Unit) 101, a ROM (Read Only Memory) 102, a RAM (Random Access Memory) 103, an interface 104, a controller 105, an external memory 106, an image processing unit 107, a DVD (Digital Versatile Disk)-ROM drive 108, an NIC (Network Interface Card) 109, and a sound processing unit 110.

When a DVD-ROM that stores a game program and data is loaded in the DVD-ROM drive 108 and the game device 100 is turned on, the program is executed and the selection determining device according to the embodiment is realized.

The CPU 101 controls the operation of the whole game device 100, and is connected to each structural element to exchange control signals and data therewith.

An IPL (Initial Program Loader), which is executed immediately after the power is turned on, is stored in the ROM 102, and when executed, makes a program stored on the DVD-ROM be read into the RAM 103 and executed by the CPU 101. Further, an operating system program and various data that are necessary for controlling the operation of the whole game device 100 are recorded in the ROM 102.

The RAM 103 is a temporary memory for data and programs, and retains a program and data read out from the DVD-ROM and data necessary for game progressing and chat communications.

The controller 105 connected via the interface 104 receives an operation input given by a user for playing a game.

The external memory 106 detachably connected via the interface 104 rewritably stores log data on chat communications, etc. As needed, a user can store such data into the external memory 106 by giving an instruction input via the controller 105.

A DVD-ROM to be loaded in the DVD-ROM drive 108 stores a program for realizing a game and image data and sound data that accompany the game. Under the control of the CPU 101, the DVD-ROM drive 108 performs a reading process on the DVD-ROM loaded therein to read out a necessary program and data. The read data is temporarily stored in the RAM 103, etc..

The image processing unit 107 processes data read out from a DVD-ROM by means of the CPU 101 and an image calculation processor (not shown) possessed by the image processing unit 107, and records the processed data in a frame memory (not shown) possessed by the image processing unit 107. Image information recorded in the frame memory is converted to video signals at predetermined synchronization timings and output to a monitor (not shown) connected to the image processing unit 107. This enables various types of images display.

The image calculation processor can perform, at high speed, overlay calculation of a two-dimensional image, transparency calculation such as α blending, etc., and various saturation calculations.

The image calculation processor can also perform a high-speed calculation of rendering polygon information that is disposed in a virtual three-dimensional space and affixed with various texture information by Z buffering and obtaining a rendered image of the polygon disposed in the virtual three-dimensional space as seen panoramically from a predetermined view position.

Furthermore, the CPU 101 and the image calculation processor can operate in cooperation to depict a string of letters as a two-dimensional image in the frame memory or on each polygon surface in accordance with font information that defines the shape of the letters. The font information is stored in the ROM 102, but exclusive font information stored in a DVD-ROM may be used.

The monitor explained above is typically a touch screen. That is, the monitor has a touch sensor panel 111 superimposed on a liquid crystal display. The touch sensor panel 111 is an input device which detects positional information corresponding to a position pressed by a finger of a player or an input pen, and which outputs the detected positional information to the CPU 101 through the interface 104.

The NIC 109 connects the game device 100 to a computer communication network (not shown) such as the Internet, etc.. The NIC 109 is comprised of a 10BASE-T/100BASE-T standard compatible product used for establishing a LAN (Local Area Network), an analog modem, an ISDN (Integrated Services Digital Network) modem, or an ADSL (Asymmetric Digital Subscriber Line) modem for establishing a connection to the Internet via a telephone line, a cable modem for establishing a connection to the Internet via a cable television line, or the like, and an interface (not shown) that intermediates between any of these and the CPU 101.

As the game device 100 is connected to an SNTP server over the Internet via the NIC 109 and information is acquired therefrom, the game device 100 can acquire current date information. Moreover, server devices of various network games may be so configured as to accomplish the same function as that of the SNTP server.

The sound processing unit 110 converts sound data read out from a DVD-ROM into an analog sound signal and outputs such sound signal from a speaker (not shown) connected thereto. Under the control of the CPU 101, the sound processing unit 110 generates a sound effect or music data to be generated in the progress of a game, and outputs a sound corresponding to such data from the speaker.

The game device 100 may use a large capacity external storage device like a hard disk or the like or the external memory 106 like a memory card and configure it to accomplish the same function as the ROM 102, the RAM 103, a DVD-ROM loaded in the DVD-ROM drive 108, etc..

Note that a selection determining device 200 of the embodiment is realized over the portable game device 100, but can be also realized over a stationary game device equipped with a high-performance image processing unit. Alternatively, the selection determining device 200 can also be realized on a general computer. For example, such a general computer includes, like the game device 100 described above, a CPU a RAM, a ROM, a DVD-ROM drive, and an NIC, and has a hard disk drive as its external storage device with also compatibility with a flexible disk, a magneto-optical disk, a magnetic tape, etc. Such a computer uses a keyboard, a mouse, etc. instead of a controller as its input device. When a program is installed in the computer and executed, the computer functions as the selecting determining device.

In the following explanation, an explanation will be given of the selection determining device through the configuration of the game device 100 shown in FIG. 1. The selection determining device can be appropriately replaced with an element of a general computer, and it should be understood that such an embodiment is within the scope of the present invention.

### [General Configuration of Selection Determining Device]

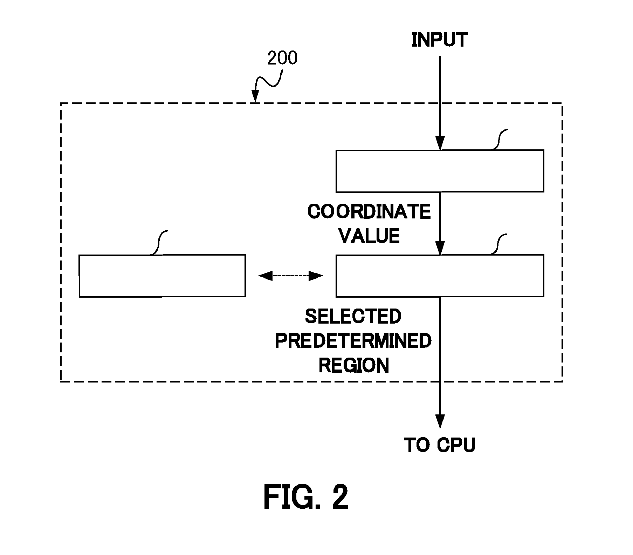

FIG. 2 is an exemplary diagram showing a general configuration of the selection determining device 200 of the present embodiment. As shown in FIG. 2, the selection determining device 200 includes a detecting unit 201, a determining unit 202, a display unit 203, etc.. Each structural element of the selection determining device 200 will be explained below.

The detecting unit 201 detects an input to a touch screen. When a point is pressed on the touch screen, the detecting unit 201 outputs coordinate values of the point, when two points are pressed, outputs coordinate values of a midpoint therebetween, and when no point is pressed, detects such a state accordingly. The touch sensor panel 111, the interface 104, etc. work together to serve as the detecting unit 201.

The determining unit 202 receives coordinate values detected by the detecting unit 201, and determines whether any one of a plurality of predetermined regions A[i] (where i = 1, 2,..., N; N is an integer indicating the number of the predetermined regions) arranged on a display surface of the touch screen so as not to overlap one another, or two regions are simultaneously selected, or none of the regions is selected based on a predetermined condition. When determining that any of the predetermined regions is selected, the determining unit 202 outputs predetermined-region identification information that specifies the predetermined region to the CPU 101 so as to enable the CPU 101 to perform a predetermined process in accordance with an application program or the like based on the selected predetermined region.

The predetermined condition for determination by the determining unit 202 will be explained in a section "selection determining process" to be discussed later. Note that the predetermined region corresponds to a region on the display surface of the touch screen where images of pressible buttons etc., are displayed, and is a circle having, for example, a radius r. The CPU 101 and the RAM 103 work together to serve as the determining unit 202.

As explained above, the display unit 203 displays graphic symbols of the pressible buttons etc., on positions in the touch screen corresponding to respective predetermined regions. In other words, an arranged position of the pressible graphic symbols displayed on the touch screen by the display unit 203 corresponds to the predetermined region subjected to determination by the determining unit 202 whether or not it is selected. The CPU 101, the RAM 103, the image processing unit 107 etc. work together to serve as the display unit 203.

The predetermined region and a midpoint-area region B[i, j] swept by a midpoint between a point included in the predetermined region A[i] and a point included in the predetermined region A[j] (where i = 1, 2, ..., N, and j = 1, 2, ..., i-1) are stored in a CD-ROM or the like as application data necessary for game progressing, and read out as needed from the CD-ROM to the RAM 103 in accordance with an application program.

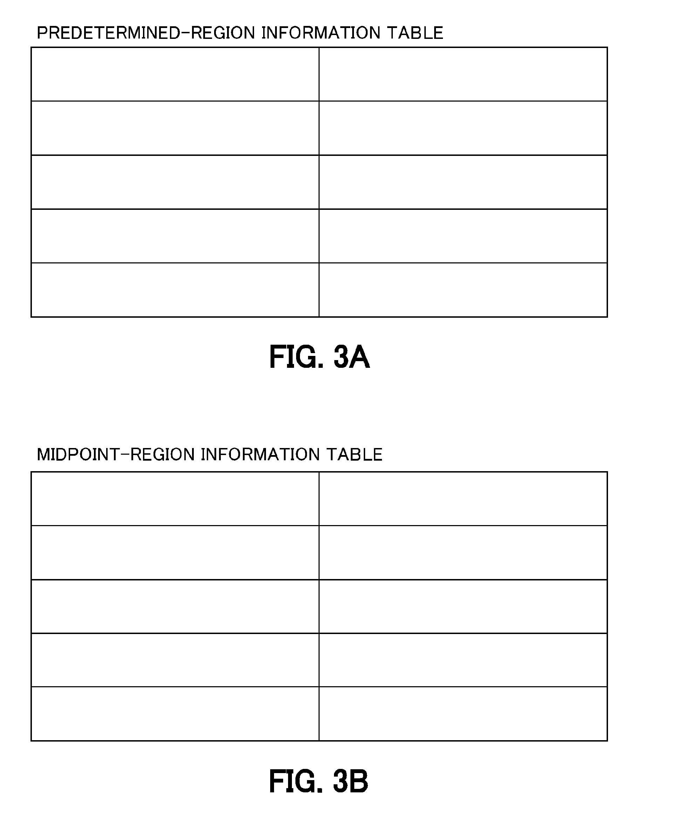

For example, the RAM 103 stores a predetermined-region information table shown in FIG. 3A and a midpoint-region information table shown in FIG. 3B for each displayed image information.

With respect to each predetermined region, the predetermined-region information table stores predetermined-region identification information (e.g., when the predetermined region is expressed as A[i], i corresponds to the predetermined-region identification information) that specifies the predetermined region and predetermined-region information associated with coordinates of the center of the predetermined region. A radius of the predetermined regions is preset, and when the radius is r, a range of each predetermined region is acquired that it is within a range of the predetermined radius r from midpoint-coordinate values of each predetermined-region information from the predetermined-region information table. Thus, as will be explained later, for example, by referring to the predetermined-region information table, the determining unit 202 can specify in which predetermined regions the detected coordinate values are included.

Conversely, with respect to each midpoint region, the midpoint-region information table stores midpoint-region information having, for example, two-predetermined-region identification information and coordinates of the center of the midpoint region associated with each other. The two-predetermined-region identification information is information specifying two predetermined regions that define the midpoint region. As explained above, each predetermined region is a circle with the radius r, so that the midpoint region defined by arbitrary two predetermined regions is also a circle with the radius r. Accordingly, by referring to the midpoint-region information table, it is possible to calculate that the range of each midpoint region is within the range of the predetermined radius r from the midpoint coordinate values of each midpoint-region information.

The respective midpoint regions are so arranged as not to overlap with any of other midpoint regions and with the predetermined region. Consequently, by referring to the midpoint-region table, when coordinate values included in the midpoint regions B[p, q] (where p = 1, 2, ..., N, q = 1, 2, ..., N, and p ≠ q) are detected, the determining unit 202 can uniquely determine which midpoint region between any two predetermined regions A[p] and A[q] the midpoint region B[p, q] including the detected coordinate values corresponds.

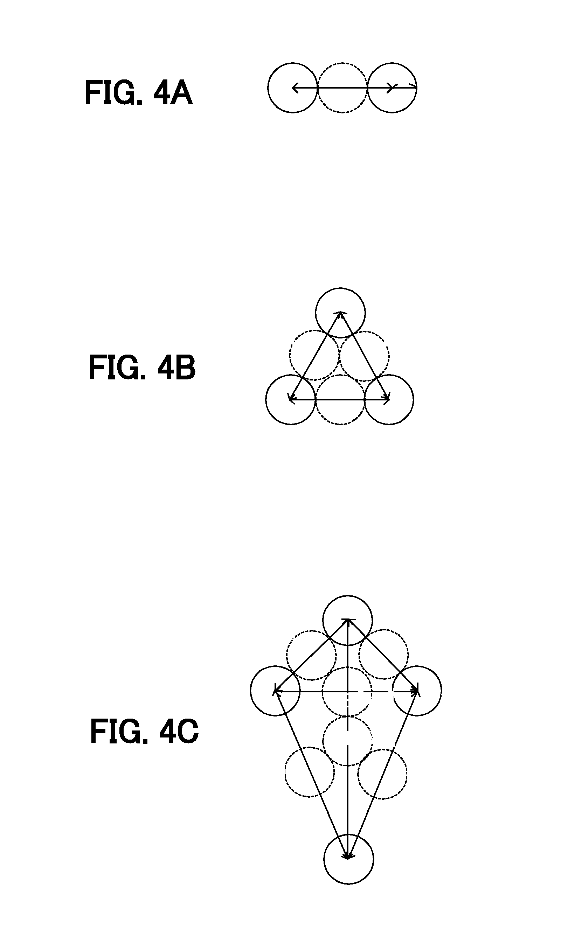

FIGS. 4A to 4C show illustrative arrangements of the predetermined regions when N = 2 to 4 (i.e., the number of predetermine regions is from 2 to 4) that satisfies a condition in which each midpoint region does not overlap with both any of other midpoint regions and the predetermined region. A circle drawn by a straight line indicates the predetermined region A[i] (where i = 1, 2, ..., and N) and a circle drawn by dotted lines indicates a midpoint region B[i, j] between the predetermined regions A[i] and A[j] (where i = 1, 2, ..., N, j = 1, 2, ..., and i-1). Each predetermined region has the radius r, so that each midpoint region also has the radius r.

As shown in FIG. 4A, when N = 2, the midpoint region B[2, 1] does not overlap with the predetermined region if the predetermined regions are so arranged that a distance between a2 and a1 which are the respective center points of the predetermined regions A[2] and A[1] becomes at least 4r.

Likewise, as shown in FIG. 4B, when N = 3, it is appropriate if the predetermined region is so arranged that a distance between two points among the center points a3, a2, and a1 of the respective predetermined regions A[3], A[2], and A[1] becomes at least 4r. Accordingly, the midpoint regions B[3, 1], B[2, 1], and B[3, 2] do not overlap one another and with any of the predetermined regions A[3], A[2], and A[1].

FIG. 4C shows an illustrative arrangement of the predetermined regions such that the midpoint regions do not overlap one another and with any of the predetermined regions when N = 4. That is, the predetermined regions A[4], A[3], A[2], and A[1] are arranged at each vertex of a kite-like shape, and a length of the shorter side of the kite-like shape (e.g., in FIG. 4C, a distance between the center points of the respective predetermined regions A[4] and A[3] and a distance between the midpoints of respective predetermined regions A[3] and A[2]) is at least 4r, and a distance between the midpoints of the diagonal lines (e.g., a distance between the center points of respective midpoints regions B[4,2] and B[3,1]) of the kite-like shape should be equal to 2r or larger.

### [Selection Determining Process]

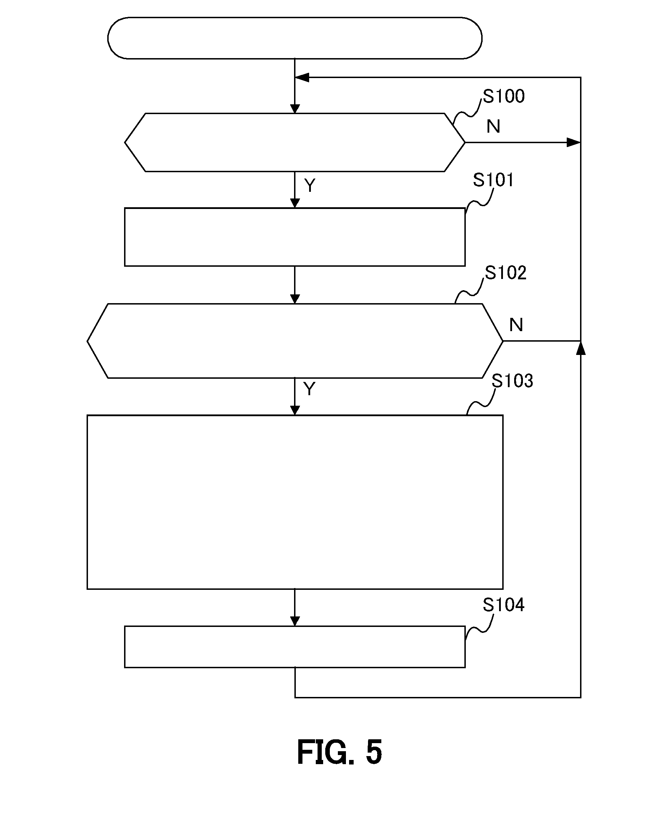

An explanation will be given of a flow of a process of determining whether a button or the like displayed on the touch screen or the like is singularly selected or two buttons are simultaneously selected by a player in the selection determining device 200 having above-described configuration with reference to FIG. 5.

First, the determining unit 202 determines whether or not there is a change in a state of detected content received from the detecting unit 201 (step S100). The determining unit 202 always receives information detected by the detecting unit 201 (i.e., the information indicating coordinate values or a non-pressed state) at a predetermined clock cycle. When there is a change in the information received from the detecting unit 201 (step S100; Y), the determining unit 202 temporarily stores the coordinate values detected before the change and time when the coordinate values are continuously detected in the RAM 103 or the like, and the process progresses to step S101. If there is no change (step S100; N), the process returns to the step S100.

In the step S101, the determining unit 202 updates a queue that stores a state change based on the coordinate values detected before the change and the duration time thereof both stored in the RAM 103. That is, first, the determining unit 202 specifies whether or not the coordinate values previously detected are included in either the predetermined region or the midpoint region by referring to the predetermined-region information table and the midpoint-region information table (more specifically, the determining unit 202 obtains the predetermined-region identification information that specifies the predetermined region or the midpoint region including the coordinate values. If no corresponding region is present, the determining unit 202 obtains information to that effect).

Subsequently, the determining unit 202 determines whether or not the predetermined region or the midpoint region stored in the queue last time matches the specified region by referring to the queue storing the state change. When such region does not match the specified region, the determining unit 202 newly stores the specified predetermined-region information and duration time thereof (i.e., duration time of the coordinate values previously detected) in the queue in association with each other. Conversely, when the predetermined region or the midpoint region stored in the queue last time matches the specified region, the duration time of the previously detected coordinate values is added to the duration time stored in the queue last time to update the queue.

Accordingly, the predetermined-region information including the detected coordinate values and the duration time when the coordinate values included in that predetermined region are continuously detected are stored in association with each other as individual elements of the queue.

Next, the determining unit 202 determines whether or not the information detected presently is information indicating a non-pressed state (step S101). When the information detected presently is the information indicating a non-pressed state (step S101; Y), the determining unit 202 examines whether or not a sequence of state change stored in the queue so far matches any one of the conditions below, and determines whether any of predetermined regions is singularly pressed, plurality of predetermined regions are simultaneously pressed, or none of the predetermined regions is pressed (step S103).

In other words,
(1) when the detecting unit 201 detects that none is pressed,
   continuously detects the coordinate values included in the predetermined region A[p] for equal to a first threshold time or longer, and
   subsequently detects that none is pressed,
   the determining unit 202 determines that the predetermined region A[p] is selected,
(2) when the detecting unit 201 detects that none is pressed,
   continuously detects the coordinate values included in the midpoint region B[p, q] for equal to the first threshold time or longer, and
   subsequently detects that none is pressed,
   the determining unit 202 determines that the two predetermined regions A[p] and A[q] are simultaneously selected,
(3) when the detecting unit 201 detects that none is pressed,
   continuously detects the coordinate values included in the midpoint region B[p, q] for equal to the first threshold time or longer,
   continuously detects the coordinate values included in the predetermined region A[p] or the predetermined region A[q] for equal to a second threshold time or shorter, and
   subsequently detects that none is pressed,
   the determining unit 202 determines that the two predetermined regions A[p] and A[q] are simultaneously selected,
(4) when the detecting unit 201 detects that none is pressed,
   continuously detects the coordinate values included in the predetermined region A[p] for equal to a third threshold time or shorter,
   continuously detects the coordinate values included in the midpoint region B[p, q] for equal to the first threshold time or longer, and
   sequentially detects that none is pressed,
   the determining unit 202 determines that the two predetermined regions A[p] and A[q] are simultaneously selected,
(5) when the detecting unit 201 detects that none is pressed,
   continuously detects the coordinate values included in the predetermined region A[p] for equal to the third threshold time or shorter,
   continuously detects the coordinate values included in the midpoint region B[p, q] for equal to the first threshold time or longer,
   continuously detects the coordinate values included in the predetermined region A[p] or the predetermined region A[q] for equal to the second threshold time or shorter, and
   sequentially detects that none is pressed,
   the determining unit 202 determines that the two predetermined regions A[p] and A[q] are simultaneously selected, and
(6) when none of the above conditions is satisfied, the determining unit 202 determines that none of the predetermined regions is selected.

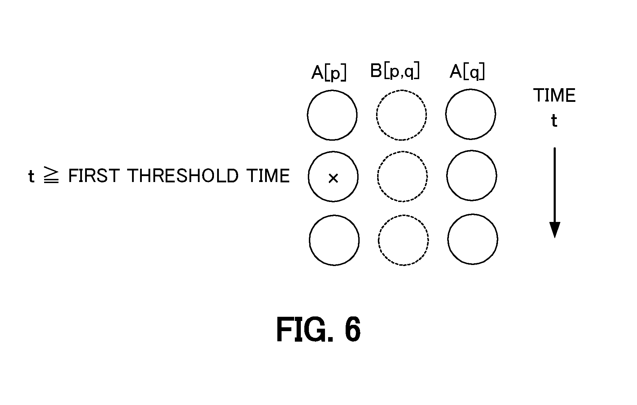

The above-explained conditions (1) to (5) will be explained with reference to FIGS. 6 to 8C. In FIGS. 6 to 8C, respectively, a plurality of rows each including three circles are arranged. The circles at both ends of each row respectively indicate the predetermined regions A[p] and A[q] (where p = 1, 2, ..., N, q = 1, 2, ..., N, and p ≠ q) and the circle at the center drawn by dotted lines indicates the midpoint region B[p, q] between the predetermined regions A[p] and A[q]. Each row indicates the state change detected by the detecting unit 201 as time proceeds. That is, a time t proceeds in the vertical direction, and in each row, "x" is written in the circle corresponding to the predetermined region or the midpoint region including the newly detected coordinate values. When the detecting unit 201 detects that none is pressed, no "x" is written in any of the circles. A time written in the left side of each row means a time for causing the state there to be maintained.

FIG. 6 is a diagram explaining the above-explained condition (1). First, the detecting unit 201 detects that none is pressed, a point included in the predetermined region A[p] is continuously pressed for equal to the first threshold time or longer, and subsequently detects that the pressing is released (i.e., the detecting unit 201 detects that none is pressed). When the state change is detected in this order, the determining unit 202 determines that the predetermined region A[p] is singularly pressed. That is, included in the determining condition is a necessity that a point in the predetermined region is pressed for equal to a threshold time or longer, so that the pressing is determined by the determining unit 202 when a user intentionally pressed the point in the predetermined region, not mistakenly. Thus, the first threshold time indicates a minimum length of time that requires the point in the predetermined region to be continuously pressed so as to allow the determining unit 202 to determine that the predetermined region is selected.

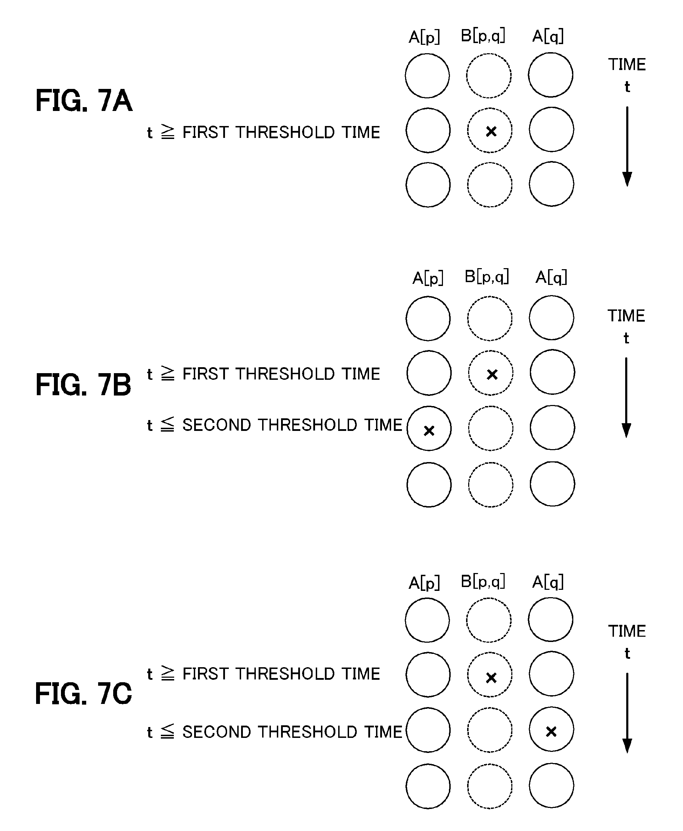

FIG. 7A is a diagram explaining the above-explained condition (2). First, the detecting unit 201 detects that none is pressed, and detects the coordinate values included in the midpoint region B[p, q] (i.e., points respectively included in the predetermined regions A[p] and A[q] are exactly simultaneously pressed). When pressing thereof are simultaneously released after this state is continued for equal to the first threshold time or longer (i.e., the detecting unit 201 detects that none is pressed), the determining unit 202 determines that the predetermined regions A[p] and A[q] are simultaneously pressed.

FIGS. 7B and 7C are diagrams explaining the above-explained condition (3). In each of FIG. 7B and FIG. 7C, like the condition (2), first, the detecting unit 201 detects that none is pressed, and detects the coordinate values included in the midpoint region B[p, q] (i.e., points included in the predetermined regions A[p] and A[q], respectively, are simultaneously pressed). After this state is continued for equal to the first threshold time or longer, the detecting unit 201 respectively detects the coordinate values included in the predetermined region A[p] in FIG. 7B and those included in the predetermined region A[q] in FIG. 7C (i.e., pressing of the point included in the predetermined region A[q] in FIG. 7B and pressing of the point included in the predetermined region A[p] in FIG. 7C are respectively released). Thereafter, before the second threshold time elapses, the detecting unit 201 detects that none is pressed (i.e., pressing of the remaining point included in the predetermined region A[p] or the predetermined region[q] is released). When the state change is detected in this order, the determining unit 202 determines that the predetermined regions A[p] and A[q] are simultaneously pressed.

Since a human operation includes an error, there may be a time difference even if releasing of pressing of two regions is simultaneously attempted. In consideration of this factor, the determining unit 202 determines that pressing of the predetermined regions A[p] and A[q] are simultaneously released even if pressing of one region is released before the second threshold time elapses since pressing of another region is released. Thus, the second threshold time is a range that is allowed as a time difference between releasing of respective two points, so that the determining unit 202 determines that pressing of the respective points included in the two predetermined regions are simultaneously released. Conversely, if pressing of one region is released after the second threshold time elapses since pressing of another region is released, a difference in time is large, so that the determining unit 202 does not determine that the predetermined regions A[p] and A[q] are simultaneously pressed. It is possible to adjust an allowable time difference at the time of pressing release by changing the second threshold time.

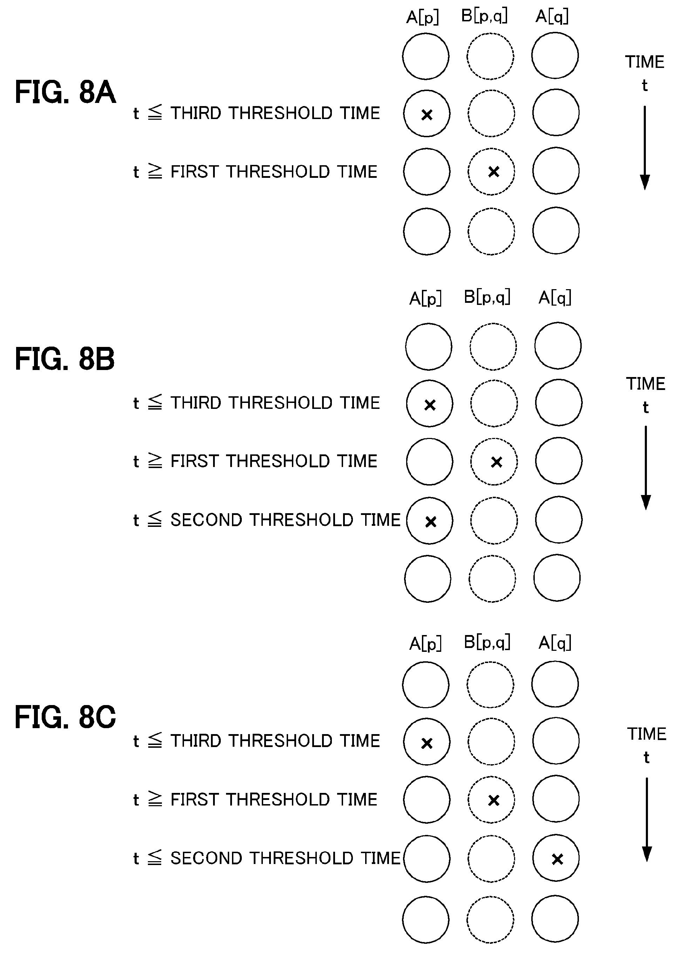

FIG. 8A is a diagram explaining the above-explained condition (4), and FIGS. 8B and 8C are diagrams explaining the above-explained condition (5). A case in which a time difference is caused when pressing of two predetermined regions is started is taken into consideration in each of FIGS. 8A to 8C.

In any condition, the detecting unit 201 detects that none is pressed at first, detects the coordinate values in the predetermined region A[p], and detects the coordinate values in the midpoint region B[p, q] after this state continues for equal to the third threshold time or shorter. That is, after a point included in the predetermined region A[p] is pressed, a point included in the predetermined region A[q] is pressed within the third threshold time. Thus, the third threshold time is a range that is allowed as a time difference between pressing of one point and pressing of another point, so that the determining unit 202 is allowed to determine that the two points included in respective two predetermined regions are simultaneously pressed.

Hereinafter, when states detected in respective cases of FIGS. 8A to 8C are same as those shown in FIGS. 7A to 7C, the determining unit 202 determines that the predetermined regions A[p] and A[q] are simultaneously pressed.

Accordingly, for any of the conditions (1) to (6), the condition determination is settled after the detecting unit 201 detects that none is pressed. Consequently, the process progresses to step S103 only after it is detected that none is pressed (step S101; Y), and the determining unit 202 determines whether or not a sequence of state changes stored in the queue matches any one of the above-explained conditions. Thereafter, the predetermined-region identification information specifying the predetermined region is output to the CPU 101 so that the CPU 101 can executes a predetermined process based on the predetermined region determined as is pressed in accordance with an application program or the like.

After the determination ends, the determining unit 202 clears the queue (step S104), and returns the process to the step S100. Conversely, when information detected presently is not the information indicating a non-pressed state (step S101; N), the determining unit 202 returns the process to the step S100 since the determination result is not settled yet.

### <Second Embodiment>

In the selection determining device 200 according to the first embodiment, the determining unit 202 does not settle a determination result until it is detected that none is pressed. However, it may be convenient if information to the effect that which predetermined region is selected is subjected to feedback to a player so that the player can confirm whether or not pressing the touch screen correctly. In the present embodiment, an explanation will be given of how to highlightingly display a predetermined region corresponding to a case in which it is determined that a condition recognized as the predetermined region being selected is satisfied.

The present embodiment has the same structure as that of the first embodiment shown in FIG. 2. In addition to the function explained in the first embodiment, however, the display unit 203 further has a function to be discussed below.

That is, in the selection determining process explained in the first embodiment, the display unit 203 monitors information from the detecting unit 201 stored in the queue by the determining unit 202, and highlightingly displays a graphic symbol representing the predetermined region with a different color, etc., at a time point when the determining unit 202 determines that selection of predetermined region is recognized.

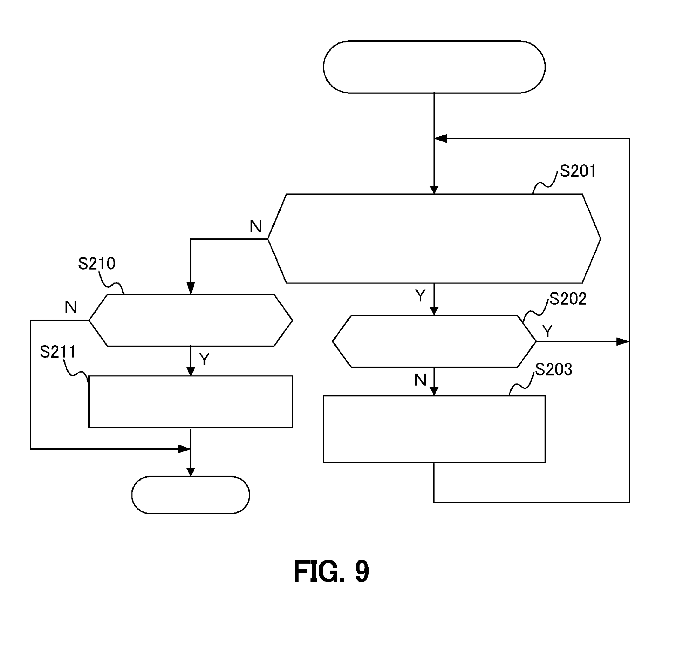

An explanation will be given of a process of highlighting display executed by the selection determining device 200 having the above-described structural element with reference to FIG. 9.

The display unit 203 monitors the state change stored in the queue by the determining unit 202 (see FIG. 5, step S100) at a predetermined time interval (preferably set shorter than the first threshold time in the first embodiment). Then, when the determining unit 202 determines that an order of detection states stored in the queue satisfies, among the determining conditions (1) to (5), a condition in which a predetermined region (the predetermined region A[p], or the predetermined regions A[p] and A[q] (where p = 1, 2, ..., N, q = 1, 2, ..., N, and p ≠ q)) is recognized as being selected (step S201; Y), the display unit 203 highlightingly displays a graphic symbol representing the corresponding predetermined region (step S203). Note that when highlighting display is already done (step S202; Y), the process returns to the step S201 without executing the step S203.

Conversely, when the determining unit 202 determines that a sequence of state changes stored in the queue do not satisfy any one of the determining conditions (1) to (5) (step S201; N), the display unit 203 terminates highlighting display (step S211) when the highlighting display is done(step S210; Y).

When it is determined that a content of the queue does not match any one of the determining condition (1) to (5) without highlighting display being performed (step S201; N), the process ends since the content of the queue will not come to satisfy any of the determining conditions afterward.

For example, in the determining condition 1, it is recognized that the predetermined region A[p] is selected when the states up to the second row in FIG. 6 are satisfied. When the coordinate values included in the predetermined region A[p] are detected in the queue and when it is determined that the coordinate values are detected for equal to the first threshold time or longer, the display unit 203 highlightingly displays the graphic symbol such as a button or the like corresponding to the predetermined region A[p]. Thereafter, when coordinate values not included in the predetermined region A[p] are detected, the display unit 203 terminates the highlighting display since the determining condition 1 will not come to satisfy at that time point.

In the determining conditions 2 to 4, it is recognized that the predetermined regions A[p] and A[q] are selected when the states up to the second row in each of FIGS. 7A to 7C are satisfied. Thus, when those detected states are stored in the queue in series and when it is determined that the coordinate values included in the midpoint region B[p, q] are detected for equal to the first threshold time or longer, the display unit 203 highlightingly displays the graphic symbols such as buttons and the like corresponding to the predetermined regions A[p] and A[q].

Subsequently, when none of the conditions shown in respective third rows in FIGS. 7A to 7C is detected, the display unit 203 determines that the determining condition 2 to 4 are not satisfied. That is, when coordinate values not included in all of the midpoint region B[p, q], the predetermined regions A[p] and A[q] are detected, or when the coordinate values included in the predetermined region A[p] or the predetermined region A[q] are continuously detected for equal to the second threshold time or longer, the highlighting display is terminated.

Likewise, in the determining condition 5, it is recognized that the predetermined regions A[p] and A[q] are selected when the states up to the third row in each of FIGS. 8A to 8C are satisfied. Accordingly, when those detecting conditions are stored in the queue in series and when it is determined that the coordinate values included in the midpoint region B[p, q] are detected for equal to the first threshold time or longer, the display unit 203 highlightingly displays the graphic symbols such as buttons, etc., corresponding to the predetermined regions A[p] and A[q]. Like the determining conditions 2 to 4, when coordinate values not included in all of the midpoint region B[p, q], the predetermined region A[p], and the predetermined region A[q] are detected or when the coordinate values included in the predetermined region A[p] or the predetermined region A[q] are continuously detected for equal to the second threshold time or longer, the highlight display is terminated.

Moreover, in the selection determining process shown in FIG. 5, when it is detected that none is pressed (step S101; Y), in preparation for a next selection determining process, the determining unit 202 controls the display unit 203 so as to terminate the highlighting display when the highlighting display is done.

In this fashion, the display unit 203 highlightingly displays the graphic symbol representing the predetermined region recognized as being selected at that time point. As described in the first embodiment, the determining content is settled after the detecting unit 201 detects that none is pressed in any of the determining conditions (1) to (5). This means that if a player presses a position on the touch screen which is subjected to termination of highlighting display before releasing a press, it is determined that the predetermined region highlightingly displayed at first is not selected. Consequently, when an unintentional operation is mistakenly performed, a player can cancel the operation.

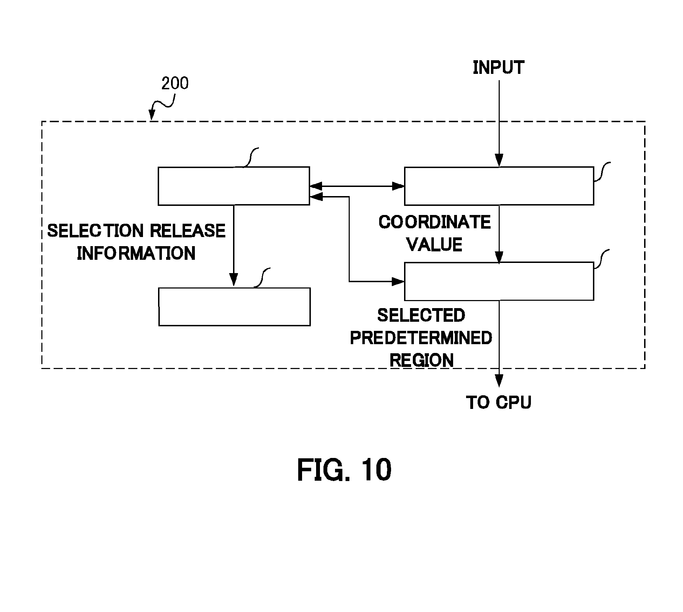

Accordingly, in the present embodiment, the selection determining device 200 may include an alerting unit 204 as shown in FIG. 10. In a case in which highlighting display is terminated after the highlighting display is done despite the coordinate values are detected, the display unit 203 sends a signal to that effect to the alerting unit 204. When receiving the signal to the effect that the highlighting display is terminated, the alerting unit 204 makes an alert with a beep sound or the like after the step S211. That is, the sound processing unit 110, the CPU 101, etc., may work together to serve as the alerting unit 204. Alternatively, the image processing unit 107, the CPU 101, etc., may work together to serve as the alerting unit 204 so as to display a notification to the effect that selection is terminated in a dialogue box or the like.

When it is detected that none is pressed (corresponds to step S101; Y in FIG. 5), in preparation for a next selection determining process, the determining unit 202 controls the alerting unit 204 to cancel the alert.

The embodiments of the present invention were explained above, but the present invention is not limited to the above-described embodiments, and can be changed and modified in various forms. Moreover, individual structural elements of the above-described embodiments can be freely combined together.

For example, in the selecting conditions, an upper limit for the time while the predetermined region and the midpoint region are continuously pressed may be set. The alerting unit 204 may make an alert for notifying a mistaken operation when coordinate values included in the predetermined region or the midpoint region is being continuously detected for equal to a certain period or longer.

The predetermined region may have a shape other than a circle. In this case, the shape of the midpoint region defined by arbitrary two predetermined regions becomes the same shape as the predetermined region. Alternatively, all of the predetermined regions may have different sizes. In this case, the size of the midpoint region defined by arbitrary two predetermined regions changes in accordance with respective sizes of those two predetermined regions.

In the above-described embodiment, the detecting unit 201 detects an input through the touch screen of the game device 100, but, may detect an input through other input devices like a track pad as far as "when a point on a two-dimensional plane is pressed, coordinate values of the point is output, when two points on the two dimensional plane are pressed, coordinate values of a midpoint between the two points are output, and when no point is pressed, such state is detected."

This application claims the benefit of a priority based on Japanese Patent Application No. 2008-033556, the entire disclosure of which is herein incorporated by reference.

## Claims

1. A selection determining device (200) which determines that either one of two predetermined regions arranged on a two-dimensional plane so as not to overlap with each other is selected or both of the two predetermined regions are selected, wherein
a midpoint region arranged on the two-dimensional plane is a region swept by a midpoint of points included in respective two predetermined regions,
the midpoint region does not overlap with any of the predetermined regions,
the selection determining device (200) comprises:
a detecting unit (201) which detects, when a point on the two-dimensional plane is pressed, a coordinate value of the point, detects, when two points on the two-dimensional plane are pressed, a coordinate value of a midpoint between the two points, and detects that no point is pressed when none is pressed; and
a determining unit (202) which determines, when it is detected that none is pressed, and a point included in the predetermined region is continuously detected for equal to a first threshold time or longer, and then it is detected that none is pressed, that the predetermined region is selected, and which determines, when it is detected that none is pressed, and a point included in the midpoint region is continuously detected for equal to the first threshold time or longer, and then it is detected that none is pressed, that both of the two predetermined regions are selected.

2. The selection determining device (200) according to claim 1, wherein when a point included in the predetermined region is continuously detected for equal to a second threshold time or shorter between when a point included in the midpoint region is continuously detected for equal to the first threshold time or longer and when it is detected that none is pressed, and, when a point included in the predetermined region is continuously detected for equal to a third threshold time or shorter between when it is detected that none is pressed and when a point included in the midpoint region is continuously detected for equal to the first threshold time or longer, the determining unit (202) determines that both of the two predetermined regions are selected.

3. The selection determining device (200) according to claim 1, wherein
the detecting unit (201) outputs through a resistive touch screen, when a point on the two-dimensional plane is pressed, a coordinate value of the point, outputs, when two points on the two-dimensional plane are pressed, a coordinate value of a midpoint between the two points, and detects that none is pressed when no point is pressed, and
the selection determining device (200) further comprises a display unit (203) which displays a graphic symbol on a position associated with each predetermined region on the touch screen, the graphic symbol representing each of the predetermined regions.

4. The selection determining device (200) according to claim 3, wherein when the detecting unit (201) detects that none is pressed and then detects a point included in the predetermined region for equal to the first threshold time or longer, the display unit (203) highlightingly displays the graphic symbol representing the predetermined region, and then when the detecting unit (201) detects that none is pressed or detects a point not included in the predetermined region, the display unit (203) terminates highlighting display, and
when the detecting unit (201) detects that none is pressed and then a point included in the midpoint region for equal to the first threshold time or longer, the display unit (203) highlightingly displays the graphic symbols representing the two predetermined regions, and then when the detecting unit (201) detects that none is pressed or detects a point not included in any of the predetermined region and the midpoint region, the display unit (203) terminates highlighting display.

5. The selection determining device (200) according to claim 4, wherein when the detecting unit (201) continuously detects a point included in the predetermined region for equal to the third threshold time or shorter between when it is detected that none is pressed and when a point included in the midpoint region is detected for equal to the first threshold time or longer, the display unit (203) highlightingly displays the graphic symbols representing the two predetermined regions, and
when the detecting unit (201) continuously detects a point included in the predetermined region for equal to the second threshold time or longer between when a point included in the midpoint region is detected for equal to the first threshold time or longer and when it is detected that none is pressed, the display unit (203) terminates highlighting display.

6. The selection determining device (200) according to claim 1, wherein the second threshold time and the third threshold time are shorter than the first threshold time.

7. A selection determining device (200) which determines that any one of or two of plural predetermined regions A[i] (where i = 1, 2, ..., N) arranged on a two-dimensional plane so as not to overlap one another are selected, wherein
a midpoint region B[i, j] (where i = 1, 2, ..., N, and j = 1, 2, ..., i-1) arranged on the two-dimensional plane is a region swept by a midpoint between a point included in a predetermined region A[i] and a point included in a predetermined region A[j],
each of the midpoint region does not overlap with other midpoint regions and with any of the predetermined regions,
the selection determining device (200) comprises:
a detecting unit (201) which detects, when a point on the two-dimensional plane is pressed, a coordinate value of the point, detects, when two points on the two-dimensional plane are pressed, a coordinate value of a midpoint between the two points, and detects that none is pressed when no point is pressed; and
a determining unit (202) which determines, with respect to integer numbers p, q (where p = 1, 2, ... , N, q = 1, 2, ... , N, and p ≠q),
(1) that a predetermined region A[p] is selected when the detecting unit (201) detects that none is pressed, and continuously detects a coordinate value included in the predetermined region A[p] for equal to a first threshold time or longer, and then detects that none is pressed,
(2) that two predetermined regions A[p] and A[q] are simultaneously selected when the detecting unit (201) detects that none is pressed, and continuously detects a coordinate value included in a midpoint region B[p, q] for equal to the first threshold time or longer, and then detects that none is pressed,
(3) that the two predetermined regions A[p] and A[q] are simultaneously selected when the detecting unit (201) detects that none is pressed, and continuously detects a coordinate value included in the midpoint region B[p, q] for equal to the first threshold time or longer, and continuously detects a coordinate value included in the predetermined region A[p] or the predetermined region A[q] for equal to a second threshold time or shorter, and then detects that none is pressed,
(4) that the two predetermined regions A[p] and A[q] are simultaneously selected when the detecting unit (201) detects that none is pressed, and continuously detects a coordinate value included in the predetermined region A[p] for equal to a third threshold time or shorter, and continuously detects a coordinate value included in the midpoint region B[p, q] for equal to the first threshold time or longer, and then detects that none is pressed,
(5) that the two predetermined regions A[p] and A[q] are simultaneously selected when the detecting unit (201) detects that none is pressed, and continuously detects a coordinate value included in the predetermined region A[p] for equal to the third threshold time or shorter, and continuously detects a coordinate value included in the midpoint region B[p, q] for equal to the first threshold time or longer, and continuously detects a coordinate value included in the predetermined region A[p] or the predetermined region A[q] for equal to the second threshold time or shorter, and then detects that none is pressed, and
(6) that none of the predetermined regions is selected in a case other than (1) to (5),
and
the second threshold time and the third threshold time are shorter than the first threshold time.

8. The selection determining device (200) according to claim 7, wherein
the detecting unit (201) outputs through a resistive touch screen, when a point on the two-dimensional plane is pressed, a coordinate value of the point, outputs, when two points on the two-dimensional plane are pressed, a coordinate value of a midpoint between the two points, and detects that none is pressed when no point is pressed, and
the selection determining device (200) further comprises a display unit (203) which displays a graphic symbol on a position associated with each predetermined region on the touch screen, the graphic symbol representing each of the predetermined regions.

9. The selection determining device (200) according to claim 7, wherein with respect to integer numbers p, q (where p = 1, 2, ..., N, q = 1, 2, ..., N, and p ≠q) the display unit (203)
(7) highlightingly displays a graphic symbol representing a predetermined region A[p] when the detecting unit (201) detects that none is pressed, and then continuously detects a coordinate value included in the predetermined region A[p] for equal to the first threshold time or longer, and terminates highlighting display when the detecting unit (201) detects that none is pressed or detects a coordinate value not included in the predetermined region A[p],
(8) highlightingly displays graphic symbols representing respective predetermined regions A[p] and A[q] when the detecting unit (201) detects that none is pressed, and then continuously detects a coordinate value included in a midpoint region B[p, q] for equal to the first threshold time or longer, and terminates highlighting display when the detecting unit (201) detects that none is pressed, detects a coordinate value not included in the midpoint region B[p, q] and in the predetermined regions A[p] and A[q], or continuously detects a coordinate value included in the predetermined region A[p] or the predetermined region A[q] for equal to the second threshold time or longer, and
(9) highlightingly displays graphic symbols representing respective predetermined regions A[p] and A[q] when the detecting unit (201) detects that none is pressed, and continuously detects a coordinate value included in the predetermined region A[p] for equal to the third threshold time or shorter, and then continuously detects a coordinate value included in the midpoint region B[p, q] for equal to the first threshold time or longer, and terminates highlighting display when the detecting unit (201) detects that none is pressed, and, detects a coordinate value not included in the midpoint region B[p, q] and in the predetermined regions A[p] and A[q] or continuously detects a coordinate value included in the predetermined region A[p] or the predetermined region A[q] for equal to the second threshold time or longer.

10. The selection determining device (200) according to claim 9, further comprising an alerting unit (204) which makes alerting until it is detected that none is pressed if highlighting display is terminated even though a coordinate value is detected after the display unit (203) highlightingly displays any of the predetermined regions.

11. The selection determining device (200) according to claim 7, wherein N = 2 or N = 3,
a predetermined region A[i] (where i = 1, 2, ..., N) and a midpoint region B[i, j] (where i = 1, 2, ..., N, and j = 1, 2, ... , i-1) are each a circle having a radius r, and
a distance between respective centers of the predetermined regions is equal to 4r or larger.

12. The selection determining device (200) according to claim 7, wherein N = 4,
a predetermined region A[i] (where i = 1, 2, ..., N) and a midpoint region B[i, j] (where i = 1, 2, ..., N, and j = 1, 2, ... , i-1) are each a circle having a radius r,
a center of the predetermined region is arranged at a vertex of a kite-like shape having a side with a length equal to 4r or longer, and
a distance between respective centers of diagonal lines of the kite-like shape is equal to 2r or larger.

13. A selection determining method of determining that either one of two predetermined regions arranged on a two-dimensional plane so as not to overlap with each other is selected or both of the two predetermined regions are selected, the selection determining method being executed by a selection determining device (200) including a detecting unit (201) and a determining unit (202), wherein
a midpoint region arranged on the two-dimensional plane is a region swept by a midpoint of points included in respective two predetermined regions,
the midpoint region does not overlap with any of the predetermined regions,
the selection determining method comprises:
a detecting step in which the detecting unit (201) detects, when a point on the two-dimensional plane is pressed, a coordinate value of the point, detects, when two points on the two-dimensional plane are pressed, a coordinate value of a midpoint between the two points, and detects that no point is pressed when none is pressed; and
a determining step in which the determining unit (202) determines, when it is detected that none is pressed, and a point included in the predetermined region is continuously detected for equal to a first threshold time or longer, and then it is detected that none is pressed, that the predetermined region is selected, and determines, when it is detected that none is pressed, and a point included in the midpoint region is continuously detected for equal to the first threshold time or longer, and then it is detected that none is pressed, that both of the two predetermined regions are selected.

14. A selection determining method of determining that any one of or two of plural predetermined regions A[i] (where i = 1, 2, ..., N) arranged on a two-dimensional plane so as not to overlap one another are selected, the selection determining method being executed by a selection determining device (200) including a detecting unit (201) and a determining unit (202), wherein
a midpoint region B[i, j] (where i = 1, 2, ..., N, and j = 1, 2, ..., i-1) arranged on the two-dimensional plane is a region swept by a midpoint between a point included in a predetermined region A[i] and a point included in a predetermined region A[j],
each of the midpoint region does not overlap with other midpoint regions and with any of the predetermined regions,
the selection determining method comprises:
a detecting step in which the detecting unit (201) detects, when a point on the two-dimensional plane is pressed, a coordinate value of the point, detects, when two points on the two-dimensional plane are pressed, a coordinate value of a midpoint between the two points, and detects that none is pressed when no point is pressed; and
a determining step in which the determining unit (202) determines, with respect to integer numbers p, q (where p = 1, 2, ..., N, q = 1, 2, ..., N, and p ≠q),
(1) that a predetermined region A[p] is selected when the detecting unit (201) detects that none is pressed, and continuously detects a coordinate value included in the predetermined region A[p] for equal to a predetermined first threshold time or longer, and then detects that none is pressed,
(2) that two predetermined regions A[p] and A[q] are simultaneously selected when the detecting unit (201) detects that none is pressed, and continuously detects a coordinate value included in a midpoint region B[p, q] for equal to the predetermined first threshold time or longer, and then detects that none is pressed,
(3) that the two predetermined regions A[p] and A[q] are simultaneously selected when the detecting unit (201) detects that none is pressed, and continuously detects a coordinate value included in the midpoint region B[p, q] for equal to the predetermined first threshold time or longer, and continuously detects a coordinate value included in the predetermined region A[p] or the predetermined region A[q] for equal to a predetermined second threshold time or shorter, and then detects that none is pressed,
(4) that the two predetermined regions A[p] and A[q] are simultaneously selected when the detecting unit (201) detects that none is pressed, and continuously detects a coordinate value included in the predetermined region A[p] for equal to a predetermined third threshold time or shorter, and continuously detects a coordinate value included in the midpoint region B[p, q] for equal to the predetermined first threshold time or longer, and then detects that none is pressed,
(5) that the two predetermined regions A[p] and A[q] are simultaneously selected when the detecting unit (201) detects that none is pressed, and continuously detects a coordinate value included in the predetermined region A[p] for equal to the predetermined third threshold time or shorter, and continuously detects a coordinate value included in the midpoint region B[p, q] for equal to the predetermined first threshold time or longer, and continuously detects a coordinate value included in the predetermined region A[p] or the predetermined region A[q] for equal to the predetermined second threshold time or shorter, and then detects that none is pressed, and
(6) that none of the predetermined regions is selected in a case other than (1) to (5),
and
the second threshold time and the third threshold time are shorter than the first threshold time.

15. An information recording medium storing a program that allows a computer to function as a selection determining device (200) which determines that any one of or two of plural predetermined regions arranged on a two-dimensional plane so as not to overlap one another is selected, wherein
a midpoint region arranged on the two-dimensional plane is a region swept by a midpoint of points included in respective two predetermined regions,
the midpoint region does not overlap with any of the predetermined regions,
the program further allows the computer to function as:
a detecting unit (201) which detects, when a point on the two-dimensional plane is pressed, a coordinate value of the point, detects, when two points on the two-dimensional plane are pressed, a coordinate value of a midpoint between the two points, and detects that no point is pressed when none is pressed; and
a determining unit (202) which determines, when it is detected that none is pressed, and a point included in the predetermined region is continuously detected for equal to a first threshold time or longer, and then it is detected that none is pressed, that the predetermined region is selected, and which determines, when it is detected that none is pressed, and a point included in the midpoint region is continuously detected for equal to the first threshold time or longer, and then it is detected that none is pressed, that both of the two predetermined regions are selected.

16. An information recording medium storing a program that allows a computer to function as a selection determining device (200) which determines that any one of or two of plural predetermined regions A[i] (where i = 1, 2, ..., N) arranged on a two-dimensional plane so as not to overlap one another are selected, wherein
a midpoint region B[i, j] (where i = 1, 2, ..., N, and j = 1, 2, ..., i-1) arranged on the two-dimensional plane is a region swept by a midpoint between a point included in a predetermined region A[i] and a point included in a predetermined region A[j],
each of the midpoint region does not overlap with other midpoint regions and with any of the predetermined regions,
the program further allows the computer to function as:
a detecting unit (201) which detects, when a point on the two-dimensional plane is pressed, a coordinate value of the point, detects, when two points on the two-dimensional plane are pressed, a coordinate value of a midpoint between the two points, and detects that none is pressed when no point is pressed; and
a determining unit (202) which determines, with respect to integer numbers p, q (where p = 1, 2, ... , N, q = 1, 2, ... , N, and p ≠q),
(1) that a predetermined region A[p] is selected when the detecting unit (201) detects that none is pressed, and continuously detects a coordinate value included in the predetermined region A[p] for equal to a predetermined first threshold time or longer, and then detects that none is pressed,
(2) that two predetermined regions A[p] and A[q] are simultaneously selected when the detecting unit (201) detects that none is pressed, and continuously detects a coordinate value included in a midpoint region B[p, q] for equal to the predetermined first threshold time or longer, and then detects that none is pressed,
(3) that the two predetermined regions A[p] and A[q] are simultaneously selected when the detecting unit (201) detects that none is pressed, and continuously detects a coordinate value included in the midpoint region B[p, q] for equal to the predetermined first threshold time or longer, and continuously detects a coordinate value included in the predetermined region A[p] or the predetermined region A[q] for equal to a predetermined second threshold time or shorter, and then detects that none is pressed,
(4) that the two predetermined regions A[p] and A[q] are simultaneously selected when the detecting unit (201) detects that none is pressed, and continuously detects a coordinate value included in the predetermined region A[p] for equal to a predetermined third threshold time or shorter, and continuously detects a coordinate value included in the midpoint region B[p, q] for equal to the first threshold time or longer, and then detects that none is pressed,
(5) that the two predetermined regions A[p] and A[q] are simultaneously selected when the detecting unit (201) detects that none is pressed, and continuously detects a coordinate value included in the predetermined region A[p] for equal to the predetermined third threshold time or shorter, and continuously detects a coordinate value included in the midpoint region B[p, q] for equal to the predetermined first threshold time or longer, and continuously detects a coordinate value included in the predetermined region A[p] or the predetermined region A[q] for equal to the predetermined second threshold time or shorter, and then detects that none is pressed, and
(6) that none of the predetermined regions is selected in a case other than (1) to (5),
and
the second threshold time and the third threshold time are shorter than the first threshold time.

17. A program that allows a computer to function as a selection determining device (200) which determines that any one of or two of plural predetermined regions arranged on a two-dimensional plane so as not to overlap one another is selected, wherein
a midpoint region arranged on the two-dimensional plane is a region swept by a midpoint of points included in respective two predetermined regions,
the midpoint region does not overlap with any of the predetermined regions,
the program further allows the computer to function as:
a detecting unit (201) which detects, when a point on the two-dimensional plane is pressed, a coordinate value of the point, detects, when two points on the two-dimensional plane are pressed, a coordinate value of a midpoint between the two points, and detects that no point is pressed when none is pressed; and
a determining unit (202) which determines, when it is detected that none is pressed, and a point included in the predetermined region is continuously detected for equal to a first threshold time or longer, and then it is detected that none is pressed, that the predetermined region is selected, and which determines, when it is detected that none is pressed, and a point included in the midpoint region is continuously detected for equal to the first threshold time or longer, and then it is detected that none is pressed, that both of the two predetermined regions are selected.

18. A program that allows a computer to function as a selection determining device (200) which determines that any one of or two of plural predetermined regions A[i] (where i = 1, 2, ..., N) arranged on a two-dimensional plane so as not to overlap one another are selected, wherein
a midpoint region B[i, j] (where i = 1, 2, ..., N, and j = 1, 2, ..., i-1) arranged on the two-dimensional plane is a region swept by a midpoint between a point included in a predetermined region A[i] and a point included in a predetermined region A[j],
each of the midpoint region does not overlap with other midpoint regions and with any of the predetermined regions,
the program further allows the computer to function as:
a detecting unit (201) which detects, when a point on the two-dimensional plane is pressed, a coordinate value of the point, detects, when two points on the two-dimensional plane are pressed, a coordinate value of a midpoint between the two points, and detects that none is pressed when no point is pressed; and
a determining unit (202) which determines, with respect to integer numbers p, q (where p = 1, 2, ... , N, q = 1, 2, ... , N, and p ≠q),
(1) that a predetermined region A[p] is selected when the detecting unit (201) detects that none is pressed, and continuously detects a coordinate value included in the predetermined region A[p] for equal to a predetermined first threshold time or longer, and then detects that none is pressed,
(2) that two predetermined regions A[p] and A[q] are simultaneously selected when the detecting unit (201) detects that none is pressed, and continuously detects a coordinate value included in a midpoint region B[p, q] for equal to the predetermined first threshold time or longer, and then detects that none is pressed,
(3) that the two predetermined regions A[p] and A[q] are simultaneously selected when the detecting unit (201) detects that none is pressed, and continuously detects a coordinate value included in the midpoint region B[p, q] for equal to the predetermined first threshold time or longer, and continuously detects a coordinate value included in the predetermined region A[p] or the predetermined region A[q] for equal to a predetermined second threshold time or shorter, and then detects that none is pressed,
(4) that the two predetermined regions A[p] and A[q] are simultaneously selected when the detecting unit (201) detects that none is pressed, and continuously detects a coordinate value included in the predetermined region A[p] for equal to a predetermined third threshold time or shorter, and continuously detects a coordinate value included in the midpoint region B[p, q] for equal to the first threshold time or longer, and then detects that none is pressed,
(5) that the two predetermined regions A[p] and A[q] are simultaneously selected when the detecting unit (201) detects that none is pressed, and continuously detects a coordinate value included in the predetermined region A[p] for equal to the predetermined third threshold time or shorter, and continuously detects a coordinate value included in the midpoint region B[p, q] for equal to the predetermined first threshold time or longer, and continuously detects a coordinate value included in the predetermined region A[p] or the predetermined region A[q] for equal to the predetermined second threshold time or shorter, and then detects that none is pressed, and
(6) that none of the predetermined regions is selected in a case other than (1) to (5),
and
the second threshold time and the third threshold time are shorter than the first threshold time.
